# EUROPÄISCHE PATENTSCHRIFT

(11) **EP 3 257 147 B1**
(45) Veröffentlichungstag und Bekanntmachung des Hinweises auf die Patenterteilung: **25.11.2020**
(21) Anmeldenummer: 15788352.1
(22) Anmeldetag: 21.10.2015
(51) Int. Cl.: H02M 7/483, H02H 7/122

(54) **UMRICHTERANORDNUNG UND VERFAHREN ZU DEREN KURZSCHLUSSSCHUTZ**
CONVERTER ARRANGEMENT AND METHOD FOR SHORT-CIRCUIT PROTECTION THEREOF
ENSEMBLE CONVERTISSEUR ET PROCÉDÉ DE PROTECTION CONTRE LES COURT-CIRCUITS DUDIT ENSEMBLE CONVERTISSEUR

(30) Priorität: 02.04.2015 WO PCT/EP2015/057359
(43) Veröffentlichungstag der Anmeldung: 20.12.2017
(73) Patentinhaber: Siemens Aktiengesellschaft, 80333 München (DE)
(72) Erfinder: XU, Jiang, 95447 Bayreuth (DE); BAKRAN, Mark-Matthias, 91052 Erlangen (DE)
(86) Internationale Anmeldenummer: PCT/EP2015/074388
(87) Internationale Veröffentlichungsnummer: WO 2016/155850

(56) Entgegenhaltungen:
- WO-A1-2008/110129
- DE-A1-102012 209 903
- JP-B1- 5 622 978
- NORRGA STAFFAN ET AL: "Converter topologies for HVDC grids", 2014 IEEE INTERNATIONAL ENERGY CONFERENCE (ENERGYCON), IEEE, 13. Mai 2014 (2014-05-13), Seiten 1554-1561, XP032615683, DOI: 10.1109/ENERGYCON.2014.6850630
- WANG YEQI ET AL: "Future HVDC-grids employing modular multilevel converters and hybrid DC-breakers", 2013 15TH EUROPEAN CONFERENCE ON POWER ELECTRONICS AND APPLICATIONS (EPE), IEEE, 2. September 2013 (2013-09-02), Seiten 1-8, XP032505277, DOI: 10.1109/EPE.2013.6631861
- XIAOQIAN LI ET AL: "Protection of Nonpermanent Faults on DC Overhead Lines in MMC-Based HVDC Systems", IEEE TRANSACTIONS ON POWER DELIVERY, IEEE SERVICE CENTER, NEW YORK, NY, US, Bd. 28, Nr. 1, 1. Januar 2013 (2013-01-01) , Seiten 483-490, XP011483733, ISSN: 0885-8977, DOI: 10.1109/TPWRD.2012.2226249 in der Anmeldung erwähnt
- XIAOQIAN LI ET AL: "Protection of Nonpermanent Faults on DC Overhead Lines in MMC-Based HVDC Systems", IEEE TRANSACTIONS ON POWER DELIVERY, IEEE SERVICE CENTER, NEW YORK, NY, US, vol. 28, no. 1, 1 January 2013 (2013-01-01), pages 483-490, XP011483733, ISSN: 0885-8977, DOI: 10.1109/TPWRD.2012.2226249

## Beschreibung

Die Erfindung betrifft eine Umrichteranordnung mit einem sich zwischen einem ersten und einem zweiten Gleichspannungspol erstreckenden, einen ersten Wechselspannungsanschluss aufweisenden ersten Phasenmodul, das einen sich zwischen dem ersten Wechselspannungsanschluss und dem ersten Gleichspannungspol erstreckenden ersten Phasenmodulzweig und einen sich zwischen dem ersten Wechselspannungsanschluss und dem zweiten Gleichspannungspol erstreckenden zweiten Phasenmodulzweig umfasst, einem sich zwischen dem ersten und dem zweiten Gleichspannungspol erstreckenden, einen zweiten Wechselspannungsanschluss aufweisenden zweiten Phasenmodul, das einen sich zwischen dem zweiten Wechselspannungsanschluss und dem ersten Gleichspannungspol erstreckenden dritten Phasenmodulzweig und einen sich zwischen dem zweiten Wechselspannungsanschluss und dem zweiten Gleichspannungspol erstreckenden vierten Phasenmodulzweig umfasst, wobei jeder der Phasenmodulzweige eine Reihenschaltung zweipoliger Submodule umfasst, wobei jedes Submodul wenigstens einen Leistungshalbleiterschalter und einen Energiespeicher umfasst und mittels einer parallel zu dessen Anschlussklemmen angeordneten Überbrückungseinheit stromrichtungsunabhängig überbrückbar ist.

Eine stromrichtungsunabhängige Überbrückung soll hierbei dann vorliegen, wenn das Submodul unabhängig von der Stromrichtung überbrückt ist.

Eine artgemäße Umrichteranordnung ist aus dem Artikel "Protection of Nonpermanent Faults on DC Overhead Lines in MMC-Based HVDC Systems" von Li et al, IEEE Trans. On Power Delivery, Vol. 28, NO. 1, Jan 2013, bekannt. Umchrichteranordnungen dieser Art finden beispielsweise in der Hochspannungsgleichstromübertragung (HGÜ) Anwendung. Dabei kann elektrische Energie effizient über lange Distanzen von Hunderten bis Tausenden von Kilometern übertragen werden. Die Übertragung erfolgt meist über Gleichspannungsleitungen, die in Form von erd- bzw. seeverlegten Kabeln oder Freileitungen (,overhead lines') realisiert sind. Die Gleichspannungsleitung umfasst üblicherweise Gleichspannungsverbindungen, welche als Freileitungen, erdverlegte Leitungen oder als Erdleiter realisiert sein können, und die mit den Gleichspannungspolen der Umrichteranordnung verbindbar sind. Insbesondere im ersten Fall können Umwelteinflüsse, wie beispielsweise Blitzeinschläge und umgefallene Bäume, einen oftmals kurzzeitigen Kurzschluss in der Gleichspannungsleitung bewirken. Bei solchen gleichspannungsseitigen Fehlern treten unten Umständen sehr hohe Kurzschlussströme auf. Die Kurzschlussströme können zu einer Beschädigung von Umrichterkomponenten führen, da sie im Allgemeinen auch durch die Phasenmodulzweige der Umrichteranordnung fließen. Daraus ergibt sich eine Notwendigkeit, für einen Kurzschlussschutz der Umrichteranordnung die Kurzschlussströme abzuschalten. Bei der bekannten Umrichteranordnung werden alle Leistungshalbleiterschalter in den Submodulen gesperrt, sobald ein gleichspannungsseitiger Kurzschluss mittels eines geeigneten Detektors festgestellt wird. Gleichzeitig werden alle Submodule mittels der zugehörigen Überbrückungseinheiten, die bei der bekannten Umrichteranordnung antiparallele Thyristoren umfassen, überbrückt bzw. ihre Klemmen kurzgeschlossen. Dazu steuert eine dazu vorgesehene Steuereinheit die Thyristoren an, in einen leitenden Zustand zu wechseln. Auf diese Weise kann wechselspannungsseitig eine Art von symmetrischem Kurzschluss aller Phasen eines an die Umrichteranordnung angeschlossenen Wechselspannungsnetzes herbeigeführt werden. Dadurch wird erreicht, dass keine Leistung mehr in die gleichspannungsseitig mit der Umrichteranordnung verbundene Gleichspannungsleitung eingespeist wird. Der Kurzschlussstrom in der Gleichspannungsleitung wird also nicht mehr durch Leistungsübertragung aufrechterhalten. Der aufgrund von Leitungsinduktivitäten in der Gleichspannungsleitung weiterhin fließende Kurzschlussstrom klingt dann vollständig ab.

Aus der WO2008/110129 A1 ist ein modularer Mehrstufenumrichter bekannt, der mittels eines Gleichspannungsschalters mit dem Gleichspannungszwischenkreis verbunden ist.

In dem Beitrag von Norrga et al., "Converter Topologies for HVDC Grids" sowie dem Beitrag von Wang et al., "Future HVDC-Grids employing Modular Multilevel Converters and Hybrid DC-Breakers" ist jeweils ein Gleichspannungsleistungsschalter beschrieben. Der dort beschriebene Gleichspannungsleistungsschalter umfasst einen Strompulsgenerator und einen Ableiterzweig in einer Parallelschaltung dazu.

Relevanter Stand der Technik für die vorliegende Erfindung ist außerdem JP5622978 B1 und DE 10 2012 209903 A1. Diese Druckschriften behandeln ebenfalls die Thematiken eines Kurzschlusses in einem DC Netz und des Freilaufpfades im Falle eines Unterbrechens eines Fehlers in einem DC Netz.

Ausgehend von der bekannten Umrichteranordnung besteht die Aufgabe der Erfindung darin, den Kurzschlussschutz der Umrichteranordnung weiter zu verbessern.

Die Aufgabe wird durch eine Umrichteranordnung gemäß dem Patentanspruch 1 gelöst. Demnach sind ein Gleichspannungsschalter in einem der beiden Gleichspannungspole sowie ein Freilaufpfad, der sich zwischen einer ersten, mit dem ersten Gleichspannungspol verbindbaren Gleichspannungsverbindung und einer zweiten, mit dem zweiten Gleichspannungspol verbindbaren Gleichspannungsverbindung erstreckt und ein Halbleiterelement mit einer Sperr- und einer Durchlassrichtung umfasst, vorgesehen.

Die Erfindung umfasst sowohl zweiphasige als auch dreiphasige und mehrphasige Ausführungen. Dabei weist die Umrichteranordnung beispielsweise bei einer dreiphasigen Ausführung einen fünften und sechsten Phasenzweig, die in der Art der bekannten Umrichteranordnung angeordnet sind.

Gemäß der Erfindung ist es selbstverständlich möglich, sowohl den ersten Gleichspannungspol als auch den zweiten Gleichspannungspol mit den zugehörigen Gleichspannungsverbindungen über jeweils wenigstens einen Gleichspannungsschalter zu verbinden.

Der erste Gleichspannungspol kann beispielsweise als eine positive Sammelschiene und der zweite Gleichspannungspol als ein Nullleiter realisiert sein. Denkbar ist auch, dass der erste Gleichspannungspol als Nullleiter und der zweite Gleichspannungspol als eine negative Sammelschiene realisiert sind. Entsprechend sind auch weitere Varianten möglich, wie beispielsweise, dass der erste Gleichspannungspol auf einem positiven und der zweite Gleichspannungspol auf einem negativen elektrischen Hochspannungspotenzial liegen. Die erfindungsgemäße Umrichteranordnung kann ferner Teil einer bipolaren Hochspannungsgleichstromübertragungsanlage (HGÜ) sein.

Zweckmäßigerweise ist das Halbleiterelement im Freilaufpfad derart angeordnet, dass es einen Stromfluss über den Freilaufpfad im Normalbetrieb der Umrichteranordnung sperrt.

Ein Vorteil der erfindungsgemäßen Umrichteranordnung ist, dass der Gleichspannungsschalter dazu verwendet werden kann, den in der Gleichspannungsleitung nach der Überbrückung der Submodule fließenden Kurzschlussstrom auf den Freilaufpfad zu kommutieren. Auf diese Weise fließt der gleichspannungsseitige Kurzschlussstrom dann vorteilhaft nicht durch die Phasenmodulzweige der Umrichteranordnung, wodurch deren Schutz verbessert wird.

Vorteilhafterweise ist es durch die Kombination der Überbrückungseinheiten und des Gleichspannungsschalters nicht mehr notwendig, den Gleichspannungsschalter beziehungsweise dessen Sperrspannung zum Schalten bei voller gleichspannungsseitiger Spannung auszulegen. Es ist vielmehr ausreichend, wenn der Gleichspannungsschalter lediglich zum Kommutieren des Kurzschlussstromes auf den Freilaufpfad eingerichtet ist. Beispielsweise kann statt einer Sperrspannung von 320 kV eine Sperrspannung von nunmehr 10 kV ausreichend sein. Dadurch wird vorteilhaft der leistungselektronische Schaltungsaufwand für den Gleichspannungsschalter reduziert. Zudem sind die Verluste in einem Normalbetrieb der Umrichteranordnung relativ niedrig.

Gemäß der Erfindung umfasst der Freilaufpfad eine in Reihe zum Halbleiterelement angeordnete Parallelschaltung mit einem Energieabsorberelement und einem dazu parallel angeordneten Absorberschalter. Das Energieabsorberelement, der beispielsweise ein Widerstandselement sein kann ist dazu eingerichtet, die Energie des Kurzschlussstromes abzuleiten, beispielsweise durch Umwandlung in Wärme. Auf diese Weise kann ein schnelleres Abklingen des Kurzschlussstromes in der Gleichspannungsleitung bewirkt werden. In einer Parallelschaltung zum Energieabsorberelement ist der Absorberschalter angeordnet, der vorzugsweise ein Halbleiterschalter ist. Er kann beispielsweise als eine Parallelschaltung eines Leistungshalbleiters, insbesondere eines IGBT, und einer antiparallelen Diode realisiert sein. Ein auf den Freilaufpfad kommutierter Kurzschlusssttrom fließt bei dem sich in Durchlassstellung befindenden Absorberschalter durch den Absorberschalter. Wird dieser abgeschaltet, so kann der Kurzschlusssttrom auf das Energieabsorberelement kommutiert werden. Auf diese Weise ist die Abklingzeit des Kurzschlussstromes, die auch als Entmagnetisierungszeit bezeichnet wird, zusätzlich kontrollierbar. Die Entmagnetisierungszeit lässt sich insbesondere durch die Anzahl der Schaltelemente des Absorberschalters und die entsprechende Absorberspannung des Energieabsorberelements frei einstellen. Dies erlaubt wiederum eine bezüglich der Verluste verbesserte Dimensionierung der übrigen Elemente der Umrichteranordnung, wie beispielsweise des Gleichspannungsschalters.

Vorzugsweise umfasst der Absorberschalter eine Reihenschaltung von Absorberschalteinheiten, die jeweils einen Leistungshalbleiterschalter und eine dazu antiparallel angeordnete Freilaufdiode umfassen. Auf diese Weise ist eine modulare Bauweise realisiert, die besonders kostengünstig und zuverlässig ist. Die Leistungshalbleiterschalter können beispielsweise durch IGBT-, IGCT- oder GTO-Schalter realisiert sein.

Das Energieabsorberelement kann auch ein Überspannungsableiter beziehungsweise eine Reihenschaltung von Überspannungsableitern umfassen. Eine solche Ausführung hat den Vorteil, dass ein zusätzlicher Schutz der Umrichteranordnung bereitgestellt ist.

Die Überbrückungseinheit umfasst geeigneterweise einen Überbrückungszweig, der parallel zu den beiden Anschlüssen bzw. Polen der Submodule angeordnet ist, so dass unabhängig von der Stromrichtung ein Kurzschluss an den Anschlüssen herbeigeführt werden kann. Die Überbrückungseinheit kann mit einer Steuereinrichtung verbunden sein, mittels der die Überbrückungseinheit gesteuert werden kann, die insbesondere also die Überbrückung der Submodule einleiten kann. Vorzugsweise umfasst die Überbrückungseinheit antiparallel geschaltete Thyristoren. Zur stromrichterunabhängigen Überbrückung der Submodule werden die Thyristoren gleichzeitig gezündet. Auf diese Weise ist eine besonders günstige und zuverlässige Überbrückungseinheit bereitgestellt.

Zur Detektion eines Kurzschlusses in der Gleichspannungsleitung kann eine Detektionseinrichtung vorgesehen sein, beispielsweise eine Strommeßeinheit, die Ausgangsseitig beispielsweise mit der Steuereinrichtung verbunden ist.

Gemäß einer vorteilhaften Ausführungsform der Erfindung umfasst das Halbleiterelement im Freilaufpfad wenigstens eine Diode und/oder einen Thyristor. Die Diode bzw. der Thyristor verhindert einen Kurzschluss zwischen den beiden Gleichspannungspolen der Gleichspannungsleitung in einem Normalbetrieb der Umrichteranordnung. Der Thyristor wird geeigneterweise in einem Kurzschlussfall gezündet, um den Kurzschlussstrom über den Freilaufpfad zu ermöglichen. Geeigneterweise weist der Freilaufpfad eine einem Nennpotenzial entgegengesetzte Polarität auf. Auf diese Weise führt der Freilaufpfad in einem Normalbetrieb der Umrichteranordnung gemäß der gewählten Durchlassrichtung der Diode im Wesentlichen keinen Strom. Das Halbleiterelement kann auch durch eine Reihenschaltung mehrerer Dioden und/oder Thyristoren gebildet sein.

Die Submodule der Umrichteranordnung können, müssen aber nicht notwendigerweise, alle gleichartig aufgebaut sein.

Vorzugsweise sind die Submodule als Halbbrückenschaltungen ausgeführt. Solche Halbbrückenschaltungen sind beispielsweise in der DE 101 03 031 B4 beschrieben. Aufgrund der verhältnismäßig kleinen Verluste sind solche Submodule besonders kostengünstig im Betrieb. Die Leistungshalbleiterschalter der Submodule sind geeigneterweise abschaltbare Leistungshalbleiter, wie beispielsweise IGBTs, GTOs oder dergleichen.

Gemäß einer Ausführungsform der Erfindung umfasst der Gleichspannungsschalter wenigstens ein Leistungshalbleiterschaltmodul mit einem Leistungshalbleiterschalter. Der Leistungshalbleiterschalter ist beispielsweise ein sogenannter solidstate-Schalter mit einem Integrated Gate Bipolar Transistor (IGBT), dem eine Freilaufdiode antiparallel geschaltet ist. Der Gleichspannungsschalter kann eine Reihenschaltung von mehreren solcher Leistungshalbleiterschaltmodulen umfassen. Die Anzahl der Leistungshalbleiterschaltmodule in der Reihenschaltung ist geeigneterweise an die jeweilige Anwendung angepasst. Die Leistungshalbleiterschaltmodule werden im Kurzschlussfall beispielsweise mittels einer dazu eingerichteten Steuerung ausgeschaltet, so dass der Kurzschlussstrom auf den Freilaufpfad kommutieren kann.

Bevorzugt weist der Gleichspannungsschalter eine Reihenschaltung aus dem wenigstens einen Leistungshalbleiterschaltermodul und wenigstens einem Trennschalter auf. Der Trennschalter kann ein mechanischer Schalter sein. Mittels des Trennschalters kann die Gleichspannungsleitung unterbrochen werden, nachdem der Strom im Trennschalter abgeklungen ist. Nach dem Öffnen des Trennschalters kann auch der wechselspannungsseitige Kurzschlussstrom auf einfache Weise unterbrochen werden, beispielsweise durch ein Sperren der Überbrückungseinheiten.

Der Gleichspannungsschalter kann ferner wenigstens einen Überspannungsableiter umfassen. Der wenigstens eine Überspannungsableiter kann beispielsweise zu dem, der parallel zu dem wenigstens einen Leistungshalbleiterschaltmodul oder der Reihenschaltung von Leistungshalbleiterschaltmodulen angeordnet sein. Der Überspannungsableiter begrenzt die über den Leistungshalbleiterschaltmodulen abfallende Spannung und kann darüber hinaus als ein Energie absorbierendes Element verwendet werden.

Wie bereits zuvor erörtert, muss die Spannungsfestigkeit bzw. Sperrfähigkeit des Gleichspannungsschalters der erfindungsgemäßen Umrichteranordnung nicht auf einen gleichspannungsseitigen Spannungsnennwert, das heißt die bei einem Normalbetrieb zwischen den beiden Gleichspannungsanschlüssen abfallende Spannung ausgelegt sein. Bevorzugt beträgt die Spannungsfestigkeit des Gleichspannungsschalters weniger als 40%, vorzugsweise zwischen 5% und 20% des Spannungsnennwertes. Dies senkt die elektrischen Verluste und damit die Betriebskosten der Umrichteranordnung. In einem konkreten Fall einer Spannung von 300 kV bis 400 kV, beispielsweise 320 kV, ist es ausreichend, wenn der Gleichspannungsschalter eine Spannungsfestigkeit aufweist, die kleiner als 20 kV, bevorzugt kleiner als 10 kV ist.

Die Erfindung betrifft ferner ein Verfahren zum Kurzschlussschutz der erfindungsgemäßen Umrichteranordnung.

Die Aufgabe der Erfindung besteht darin, ein solches Verfahren vorzuschlagen, dass möglichst einfach und zuverlässig ist.

Die Erfindung löst diese Aufgabe durch ein Verfahren, bei dem bei einem gleichspannungsseitigen Kurzschluss alle Submodule stromrichtungsunabhängig überbrückt werden, worauf der Gleichspannungsschalter abgeschaltet wird, so dass ein gleichspannungsseitiger Kurzschlussstrom auf den Freilaufpfad kommutiert wird.

Bei dem erfindungsgemäßen Verfahren wird also in einem gleichspannungsseitigen Kurzschlussfall mittels der Überbrückungseinheiten ein wechselspannungsseitiger Kurzschluss in der Umrichteranordnung erzeugt, worauf mittels des Gleichspannungsschalters der Kurzschlussstrom von den Phasenmodulzweigen der Umrichteranordnung auf den Freilaufpfad aktiv kommutiert wird.

Die Vorteile des erfindungsgemäßen Verfahrens ergeben sich aus den zuvor beschriebenen Vorteilen der erfindungsgemäßen Umrichteranordnung.

Bevorzugt wird der im Freilaufpfad angeordneter Absorberschalter abgeschaltet, so dass ein Strom im Freilaufpfad auf das parallel zum Absorberschalter angeordnete Energieabsorberelement kommutiert wird. Die Abschaltung erfolgt dabei wie zuvor bereits beschrieben nachdem der Kurzschlussstrom auf den Freilaufpfad kommutiert wurde und erlaubt eine unabhängige Einstellung der Entmagnetisierungszeit im Freilaufpfad.

Im Folgenden soll die Erfindung anhand von Figuren 1 bis 5 näher erläutert werden.
- Figur 1: zeigt ein erstes Ausführungbeispiel einer erfindungsgemäßen Umrichteranordnung in schematischer Darstellung;
- Figur 2: zeigt ein zweites Ausführungsbeispiel der erfindungsgemäßen Umrichteranordnung in schematischer Darstellung;
- Figur 3: zeigt ein zweipoliges Submodul der Umrichteranordnung der Figuren 1 und 2 in schematischer Darstellung;
- Figur 4: zeigt den schematischen Verlauf von Strömen in der Umrichteranordnung der Figur 1;
- Figur 5: zeigt den schematischen Verlauf von Strömen in der Umrichteranordnung der Figur 2.

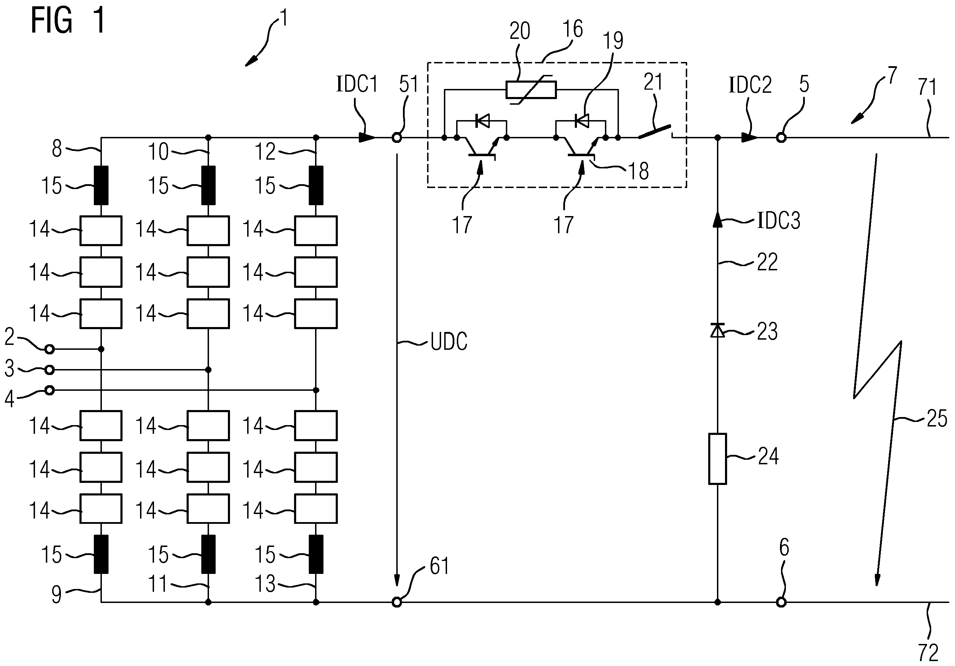

Im Einzelnen ist in Figur 1 ein Ausführungsbeispiel einer erfindungsgemäßen Umrichteranordnung 1 dargestellt. Die Umrichteranrordnung 1 umfasst drei Wechselspannungsanschlüsse 2, 3 und 4, die dazu eingerichtet sind, die Umrichteranordnung 1 mit einem dreiphasigen Wechselspannungsnetz zu verbinden. Ferner umfasst die Umrichteranordnung 1 einen ersten Gleichspannungsanschluss 5 und einen zweiten Gleichspannungsanschluss 6 zum Verbinden mit einer Gleichspannungsleitung 7, nämlich mit einer ersten Gleichspannungsverbindung 71 bzw. einer zweiten Gleichspannungsverbindung 72. Die Umrichteranordnung 1 ist demnach im vorliegenden Ausführungsbeispiel dreiphasig ausgebildet, wobei die Erfindung selbstverständlich nicht auf eine dreiphasige Ausführung beschränkt ist. Sie umfasst einen ersten Phasenzweig 8, der sich zwischen einem ersten Gleichspannungspol 51 und dem ersten Wechselspannungsanschluss 2 erstreckt, einen zweiten Phasenmodulzweig 9, der sich zwischen dem ersten Wechselspannungsanschluss 2 und einem zweiten Gleichspannungspol 61 erstreckt, einen dritten Phasenmodulzweig 10, der sich zwischen dem ersten Gleichspannungspol 51 und einem zweiten Wechselspannungsanschluss 3 erstreckt, einen vierten Phasenmodulzweig 11, der sich zwischen dem zweiten Wechselspannungsanschluss und dem zweiten Gleichspannungspol 61 erstreckt, einen fünften Phasenmodulzweig 12, der sich zwischen dem ersten Gleichspannungspol 51 und dem dritten Wechselspannungsanschluss 4 erstreckt sowie einen sechsten Phasenmodulzweig 13, der sich zwischen dem dritten Wechselspannungsanschluss 4 und dem zweiten Gleichspannungspol 61 erstreckt. Der erste Gleichspannungspol 51 ist mit dem ersten Gleichspannungsanschluss 5 verbunden. Der zweite Gleichspannungspol 61 ist mit dem zweiten Gleichspannungsanschluss 6 verbunden.

Der erste Phasenmodulzweig 8 umfasst eine erste Reihenschaltung von zweipoligen Submodulen 14 sowie eine zu der Reihenschaltung der zweipoligen Submodule 14 in Reihe angeordnete Glättungsdrossel 15. Entsprechend umfassen die Phasenmodulzweige 9, 10, 11, 12, 13 jeweils eine Reihenschaltung der Submodule 14 und eine dazu in Reihe geschaltete Glättungsdrossel 15. In dem in Figur 1 dargestellten Ausführungsbeispiel der Umrichteranordnung 1 weist jedes der Phasenmodulzweige 8 - 13 drei Submodule 14 auf. Die Anzahl der Submodule 14 in jedem Phasenmodulzweig ist im Allgemeinen jedoch an die jeweilige Anwendung der Umrichteranordnung 1 angepasst und kann jede beliebige Anzahl sein.

In dem in Figur 1 dargestellten Ausführungsbeispiel sind alle Submodule 14 der Umrichteranordnung 1 gleichartig aufgebaut. Die Phasenmodulzweige 8 - 13 bilden zusammen mit den Wechselspannungsanschlüssen 2 - 4 und dem Gleichspannungsanschlüssen 5, 6 demnach einen sogenannten modularen Mehrstufenumrichter (MMC) aus. Ein solcher Umrichter ist beispielsweise aus der DE 10 103 031 B4 bekannt. Mittels einer geeigneten Steuerung (in Figur 1 nicht dargestellt) kann in den Phasenmodulzweigen 8 - 13 eine vorgegebene Spannung erzeugt werden, so dass gleichspannungsseitig der Phasenmodulzweige 8 - 13 eine Spannung UDC abfällt.

Die Umrichteranordnung 1 umfasst ferner einen Gleichspannungsschalter 16, der zwischen einem Potenzialpunkt 51 zwischen dem ersten Phasenmodulzweig 8 und dem dritten Phasenmodulzweig 10 und dem ersten Gleichspannungsanschluss 5 angeordnet ist. Der Gleichspannungsschalter 16 weist eine Reihenschaltung von Leistungshalbleiterschaltmodulen 17 auf, wobei jedes Leistungshalbleiterschaltmodul 17 einen IGBT 18 sowie eine dazu antiparallel geschaltete Freilaufdiode 19 aufweist. In Parallelschaltung zu den Leistungshalbleiterschaltmodulen 17 ist ein Überspannungsableiter 20 angeordnet. In Reihe zu den Leistungshalbleiterschaltmodulen 17 ist ferner ein Trennschalter 21 angeordnet, der im dargestellten Ausführungsbeispiel ein mechanischer Schalter ist.

Die Umrichteranordnung 1 umfasst ferner einen Freilaufpfad 22. Der Freilaufpfad 22 ist parallel zu den Phasenmodulzweigen 8 - 13 angeordnet und erstreckt sich zwischen den beiden Gleichspannungsverbindungen 71, 72. Der Freilaufpfad 22 weist ferner ein Halbleiterelement 23 auf, der als eine Halbleiterdiode realisiert ist. Darüber hinaus weist der Freilaufpfad 22 ein Energieabsorberelement 24 auf, der in Reihe zum Halbleiterelement 23 angeordnet ist.

Eine solche Umrichteranordnung 1 kann insbesondere in einem gleichspannungsseitigen Kurzschlussfall vor Schäden geschützt werden. Der Kurzschluss ist in Figur 1 durch den gezackten Pfeil 25 angedeutet.

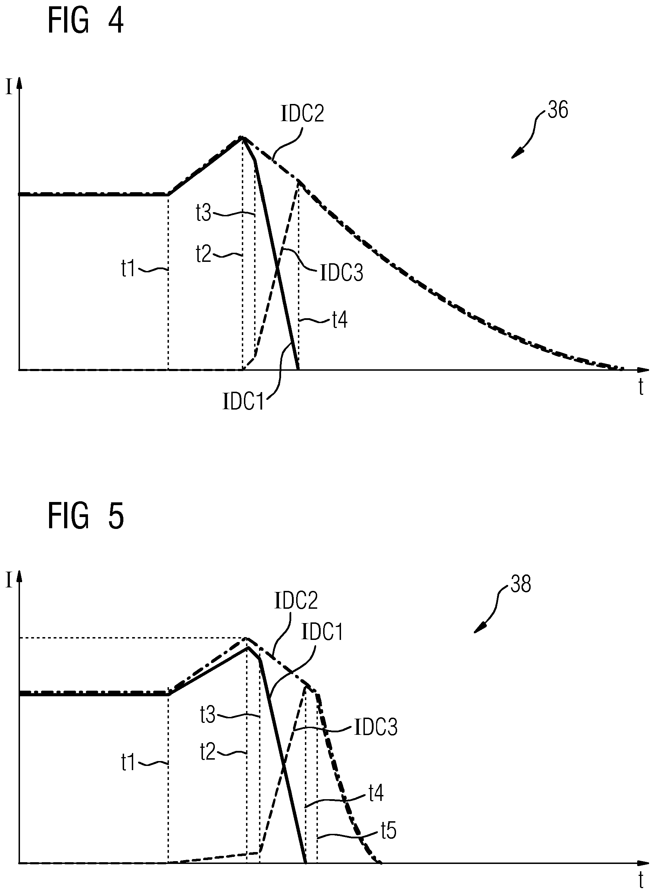

In der nachfolgenden Figur 4 soll näher auf die Funktionsweise der Umrichteranordnung 1 sowie deren Schutzfunktion eingegangen werden, wobei mit IDC1 der Strom durch den Gleichspannungsschalter 16 bezeichnet wird, mit IDC2 der Strom in Gleichspannungsleitung 7 bezeichnet wird und mit IDC3 der Strom im Freilaufpfad 22 bezeichnet wird.

Die Submodule 14 der Umrichteranordnung 1 der Figur 1 sind als Halbbrückenschaltungen realisiert.

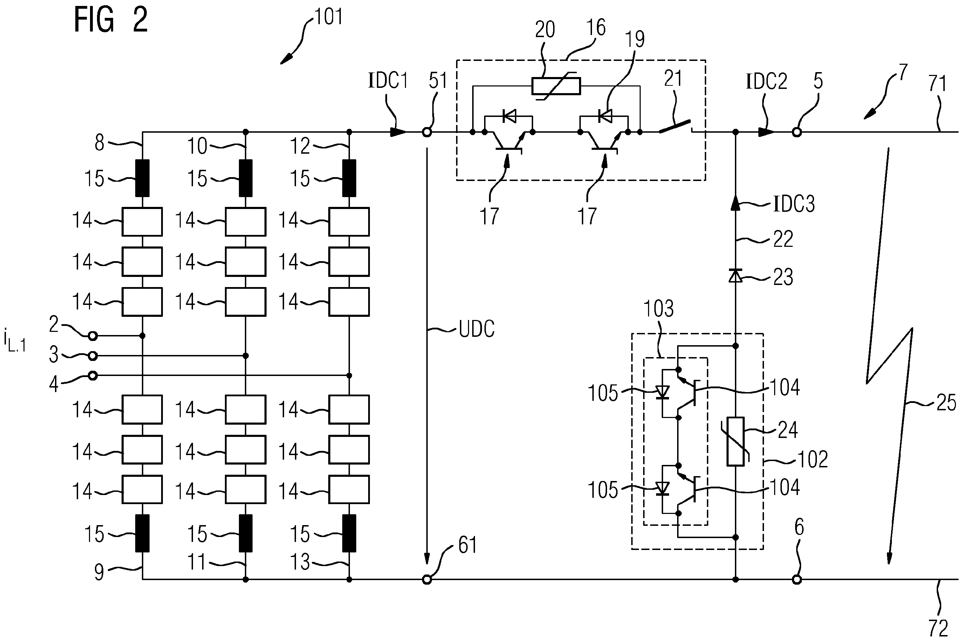

In Figur 2 ist ein zweites Ausführungsbeispiel einer erfindungsgemäßen Umrichteranordnung 101 dargestellt.

Gleiche und gleichartige Elemente der Umrichteranordnungen 1 und 101 sind aus Gründen der Übersichtlichkeit mit gleichen Bezugszeichen versehen.

Im Unterschied zur Umrichteranordnung 1 weist der Freilaufpfad 22 der Umrichteranordnung 101 eine in Reihe zum Halbleiterelement 23 angeordnete Parallelschaltung 102 auf mit einem Energieabsorberelement 24 und einem dazu parallel angeordneten Absorberschalter 103. Das Energieabsorberelement 24 ist ein Überspannungsableiter. Der Absorberschalter 102 umfasst eine Reihenschaltung von Leistungshalbleiterschaltern 104, im dargestellten Ausführungsbeispiel IGBT's, deren jeweils eine Freilaufdiode 105 antiparallel geschaltet ist. In Figur 2 weist die Reihenschaltung zwei Leistungshalbleiterschalter 104, deren Anzahl kann jedoch mit der jeweiligen Anwendung variieren und ist grundsätzlich beliebig.

Die Funktionsweise der Umrichteranordnung 101 sowie deren Schutzfunktion ist ähnlich derjenigen der Umrichteranordnung 1. In der nachfolgenden Figur 5 soll näher auf die Funktionsweise der Umrichteranordnung 101 sowie deren Schutzfunktion eingegangen werden. Wie zuvor werden dabei mit IDC1 der Strom durch den Gleichspannungsschalter 16 bezeichnet, mit IDC2 der Strom in Gleichspannungsleitung 7 und mit IDC3 der Strom im Freilaufpfad 22 bezeichnet.

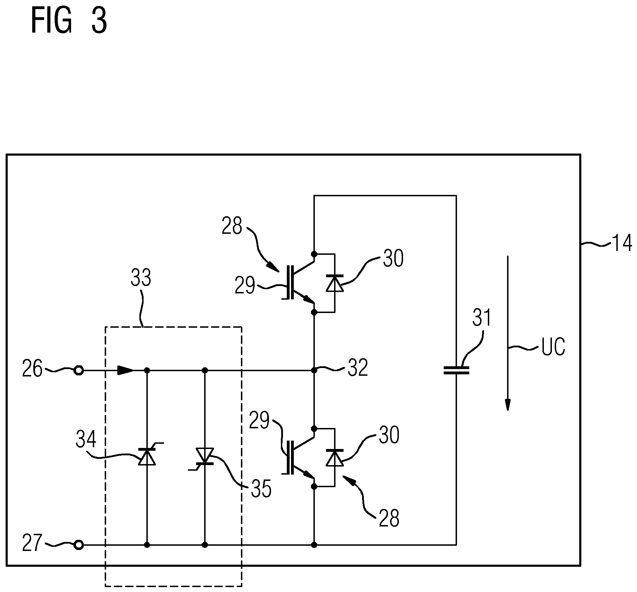

Figur 3 zeigt den prinzipiellen Aufbau eines der Submodule 14 der Umrichteranordnung 1 bzw. 101 der Figuren 1 oder 2. Das Submodul 14 umfasst eine erste Anschlussklemme 26 und eine zweite Anschlussklemme 27. Ferner umfasst das Submodul 14 zwei in Reihe geschaltete Leistungshalbleiterschalteinheiten 28. Jede der beiden Leistungshalbleiterschalteinheiten 28 umfasst einen Leistungshalbleiterschalter 29, der in dem in Figur 2 dargestellten Ausführungsbeispiel ein IGBT ist, sowie eine dazu antiparallel geschaltete Freilaufdiode 30. Parallel zu der Reihenschaltung der Leistungshalbleiterschalteinheiten 28 ist ein Energiespeicher 31 angeordnet, der im vorliegenden Ausführungsbeispiel des Submoduls 14 ein Leistungskondensator ist. Am Leistungskondensator 31 fällt eine Spannung, die in Figur 2 mit UC bezeichnet ist.

Die zweite Anschlussklemme 27 des Submoduls 14 ist mit einem Pol des Leistungskondensators 31 verbunden, die erste Anschlussklemme 26 des Submoduls 14 ist mit einem Potenzialpunkt 32 zwischen den beiden Leistungshalbleiterschalteinheiten 28 verbunden.

Das Submodul 14 umfasst ferner eine Überbrückungseinheit 33, die derart mit den Anschlüssen 26, 27 verbunden ist, dass sie das Submodul 14 überbrücken beziehungsweise die beiden Anschlussklemmen 26, 27 kurzschliessen kann. Die Überbrückungseinheit 33 weist zwei antiparallel geschaltete Thyristoren 34 und 35 auf, die eine stromrichtungsunabhängige Überbrückung des Submoduls 40 bereitstellen können. Zur Überbrückung des Submoduls 14 werden die beiden Thyristoren mittels einer nicht dargestellten Steuerungseinheit angesteuert, gleichzeitig zu zünden.

Figur 4 zeigt eine Skizze der zeitlichen Verläufe der drei Ströme IDC1, IDC2 und IDC3 des Ausführungsbeispiels der Umrichteranordnung 1 der Figur 1 in einem Diagramm 36. Auf der Abszisse t des Diagramms 36 ist die ablaufende Zeit und auf der Ordinate I die Stromwerte zu gegebenen Zeiten aufgetragen. Die Stromrichtung der drei Ströme IDC1, IDC2, IDC3 im Normalbetrieb ist in Fig. 1 durch entsprechende Pfeile angedeutet.

Zu einem Zeitpunkt, der im Diagramm 36 als eine unterbrochene Linie t1 gekennzeichnet ist, tritt ein Fehler, beispielsweise ein Kurzschluss in der Gleichspannungsleitung 7 auf. Ab diesem Zeitpunkt steigen die Ströme IDC1 und IDC2 an. Bis zu einem Zeitpunkt, der als eine unterbrochene Linie t2 gekennzeichnet ist, stimmen die Werte der Ströme IDC1 und IDC2 überein. Es ist erkennbar, dass aufgrund der Polarität der Diode 23 entgegen dem im Normalbetrieb vorliegenden Nennpotenzial der Freilaufpfad im Normalbetrieb im Wesentlichen stromlos ist.

Zu dem mit t2 bezeichneten Zeitpunkt wird der Fehler mittels einer geeigneten Fehlererkennungseinrichtung detektiert. Daraufhin werden alle Überbrückungseinheiten 33 in den Phasenmodulzweigen 8 bis 13 angesteuert, die ihnen zugeordneten Submodule 14 zu überbrücken, das heißt, die Thyristoren 34 und 35 werden in jedem Submodul 14 gezündet. Auf diese Weise werden die Phasen des wechselspannungsseitig mit den Wechselspannungsanschlüssen 2, 3, 4 verbundenen Wechselspannungsnetzes kurzgeschlossen. Mit anderen Worten wird das Wechselspannungsnetz von der Gleichspannungsseite getrennt, so dass der Kurzschlussstrom nicht mehr aus dem Wechselspannungsnetz gespeist, also mit Energie versorgt werden kann. Ab diesem Zeitpunkt sinken die Werte der Ströme IDC1 und IDC2.

Zu einem mit der unterbrochenen Linie t3 gekennzeichneten Zeitpunkt werden die Leistungshalbleiterschalter 18 der Leistungshalbleiterschaltmodule 17 angesteuert, abzuschalten. Aufgrund der Sperrspannung der Leistungshalbleiterschalter 17 wird der Strom mit Hilfe des Überspannungsableiters 20, der auch als eine Reihenschaltung von Überspannungsableitern realisiert sein kann, auf den Freilaufpfad 22 kommutiert. Ab diesem Zeitpunkt sinkt der Wert des Stromes IDC1 sehr schnell auf null.

Sobald IDC1 auf null oder nahezu null abgesunken ist, was in Figur 3 zu einem Zeitpunkt geschieht, der durch eine mit t4 gekennzeichnete unterbrochene Linie angedeutet ist, kann der mechanische Trennschalter 21 geöffnet werden. Der verbleibende Kurzschlussstrom IDC3 in der Gleichspannungsleitung 7, dessen Wert dann dem Wert des Stromes IDC2 entspricht, fließt ab diesem Zeitpunkt vollständig über den Freilaufpfad 22. IDC3 klingt entsprechend einer RL-Konstante der Gleichspannungsleitung 7 ab. Das Abklingen des Stromes IDC3 wird durch das Energieabsorberelement 24 zusätzlich beschleunigt.

In Figur 5 ist eine Skizze der zeitlichen Verläufe der drei Ströme IDC1, IDC2 und IDC3 des Ausführungsbeispiels der Umrichteranordnung 101 der Figur 2 in einem Diagramm 37 gezeigt. Auf der Abszisse t des Diagramms 37 ist die ablaufende Zeit und auf der Ordinate I die Stromwerte zu gegebenen Zeiten aufgetragen. Die Stromrichtung der drei Ströme IDC1, IDC2, IDC3 im Normalbetrieb ist in Fig. 2 durch entsprechende Pfeile angedeutet.

Zu einem Zeitpunkt, der im Diagramm 37 als eine unterbrochene Linie t1 gekennzeichnet ist, tritt ein Fehler, beispielsweise ein Kurzschluss in der Gleichspannungsleitung 7 auf. Ab diesem Zeitpunkt steigen die Ströme IDC1 und IDC2 an. Bis zu einem Zeitpunkt, der als eine unterbrochene Linie t2 gekennzeichnet ist, stimmen die Werte der Ströme IDC1 und IDC2 weitgehend überein. Es ist erkennbar, dass aufgrund der Polarität der Diode 23 entgegen dem im Normalbetrieb vorliegenden Nennpotenzial der Freilaufpfad im Normalbetrieb im Wesentlichen stromlos ist und zwischen den Zeitpunkten t1 und t2 der Strom IDC3 einen relativ kleinen Betrag aufweist.

Zu dem mit t2 bezeichneten Zeitpunkt wird der Fehler mittels einer geeigneten Fehlererkennungseinrichtung detektiert. Daraufhin werden alle Überbrückungseinheiten 33 in den Phasenmodulzweigen 8 bis 13 der Umrichteranordnung 101 angesteuert, die ihnen zugeordneten Submodule 14 zu überbrücken, das heißt, die Thyristoren 34 und 35 werden in jedem Submodul 14 gezündet. Auf diese Weise werden die Phasen des wechselspannungsseitig mit den Wechselspannungsanschlüssen 2, 3, 4 verbundenen Wechselspannungsnetzes kurzgeschlossen. Mit anderen Worten wird das Wechselspannungsnetz von der Gleichspannungsseite getrennt, so dass der Kurzschlussstrom nicht mehr aus dem Wechselspannungsnetz gespeist, also mit Energie versorgt werden kann. Ab diesem Zeitpunkt sinken die Werte der Ströme IDC1 und IDC2.

Zu einem mit der unterbrochenen Linie t3 gekennzeichneten Zeitpunkt werden die Leistungshalbleiterschalter 18 der Leistungshalbleiterschaltmodule 17 angesteuert, abzuschalten. Aufgrund der Sperrspannung der Leistungshalbleiterschalter 17 wird der Strom mit Hilfe des Überspannungsableiters 20, der auch als eine Reihenschaltung von Überspannungsableitern realisiert sein kann, auf den Freilaufpfad 22 kommutiert. Ab diesem Zeitpunkt sinkt der Wert des Stromes IDC1 sehr schnell auf null.

Sobald IDC1 auf null oder nahezu null abgesunken ist, was in Figur 3 zu einem Zeitpunkt geschieht, der durch eine mit t4 gekennzeichnete unterbrochene Linie angedeutet ist, kann der mechanische Trennschalter 21 geöffnet werden. Der verbleibende Kurzschlussstrom IDC3 in der Gleichspannungsleitung 7, dessen Wert dann dem Wert des Stromes IDC2 entspricht, fließt ab diesem Zeitpunkt vollständig über den Freilaufpfad 22. IDC3 klingt entsprechend einer RL-Konstante der Gleichspannungsleitung 7 ab.

Zu einem Zeitpunkt, der in Figur 5 mit einer unterbrochenen Linie t5 gekennzeichnet ist, werden die Leistungshalbleiterschalter 104 des Absorberschalters 103 angesteuert, abzuschalten. Zu diesem Zeitpunkt ist die AC-Seite von der DC-Seite vollständig getrennt. Durch das abschalten des Absorberschalters 103 wird der Strom IDC3 auf das Energieabsorberelement 24 kommutiert. Der Kurzschlussstrom fällt schnell ab. Die Entmagnetisierungszeit lässt sich dabei durch die Anzahl der Leistungshalbleiterschalter 104 und die Spannungskennlinie des Energieabsorberelements 24, im Beispiel der Figur 2 des Überspannungsableiters, frei einstellen.

## Patentansprüche

1. Umrichteranordnung (1, 101) mit
- einem sich zwischen einem ersten und einem zweiten Gleichspannungspol (51, 61) erstreckenden, einen ersten Wechselspannungsanschluss (2) aufweisenden ersten Phasenmodul, das einen sich zwischen dem ersten Wechselspannungsanschluss (2) und dem ersten Gleichspannungspol (51) erstreckenden ersten Phasenmodulzweig (8) und einen sich zwischen dem ersten Wechselspannungsanschluss (2) und dem zweiten Gleichspannungspol (61) erstreckenden zweiten Phasenmodulzweig (9) umfasst,
- einem sich zwischen dem ersten und dem zweiten Gleichspannungspol (51, 61) erstreckenden, einen zweiten Wechselspannungsanschluss (3) aufweisenden zweiten Phasenmodul, das einen sich zwischen dem zweiten Wechselspannungsanschluss (3) und dem ersten Gleichspannungspol (51) erstreckenden dritten Phasenmodulzweig (10) und einen sich zwischen dem zweiten Wechselspannungsanschluss (3) und dem zweiten Gleichspannungspol (61) erstreckenden vierten Phasenmodulzweig (11) umfasst, wobei
jeder der Phasenmodulzweige (8, 9, 10, 11) eine Reihenschaltung zweipoliger Submodule (14) umfasst, wobei jedes Submodul wenigstens zwei in Reihe geschaltete Leistungshalbleiterschalter (28, 29) und einen Energiespeicher (31) umfasst und mittels einer parallel zu dessen Anschlussklemmen angeordneten Überbrückungseinheit (33) stromrichtungsunabhängig überbrückbar ist,
- einen Gleichspannungsschalter (16) in einem der beiden Gleichspannungspole (51, 61),
**gekennzeichnet durch**
- einen Freilaufpfad (22), der sich zwischen einer ersten, mit dem ersten Gleichspannungspol (51) verbindbaren Gleichspannungsverbindung (71) und einer zweiten, mit dem zweiten Gleichspannungspol (61) verbindbaren Gleichspannungsverbindung (72) erstreckt und ein Halbleiterelement (23) mit einer Sperr- und einer Durchlassrichtung umfasst, wobei
der Freilaufpfad (22) eine in Reihe zum Halbleiterelement (23) angeordnete Parallelschaltung (102) mit einem Energieabsorberelement (24) und einem dazu parallel angeordneten Absorberschalter (103) umfasst.

2. Umrichteranordnung (101) nach Anspruch 1, wobei der Absorberschalter (103) eine Reihenschaltung von Absorberschalteinheiten umfasst, die jeweils einen Leistungshalbleiterschalter (104) und eine dazu antiparallel angeordnete Freilaufdiode (105) umfassen.

3. Umrichteranordnung (1, 101) nach einem der vorangehenden Ansprüche, wobei die Überbrückungseinheit (33) antiparallel geschaltete Thyristoren (34, 35) umfasst.

4. Umrichteranordnung (1, 101) nach einem der vorangehenden Ansprüche, wobei das Halbleiterelement (23) im Freilaufpfad wenigstens eine Diode und/oder einen Thyristor umfasst.

5. Umrichteranordnung (1, 101) nach einem der vorangehenden Ansprüche, wobei die Submodule (14) als Halbbrückenschaltungen ausgeführt sind.

6. Umrichteranordnung (1, 101) nach einem der vorangehenden Ansprüche, wobei der Gleichspannungsschalter (16) wenigstens ein Leistungshalbleiterschaltmodul (17) mit einem Leistungshalbleiterschalter (18) umfasst.

7. Umrichteranordnung (1, 101) nach Anspruch 6, wobei der Gleichspannungsschalter (16) eine Reihenschaltung aus dem wenigstens einen Leistungshalbleiterschaltmodul (17) und wenigstens einem Trennschalter (21) aufweist.

8. Umrichteranordnung (1, 101) nach Anspruch 6 oder 7, wobei der Gleichspannungsschalter (16) einen Überspannungsableiter (20) umfasst, der parallel zu dem wenigstens einen Leistungshalbleiterschaltmodul (17) angeordnet ist.

9. Umrichteranordnung (1, 101) nach einem der vorangehenden Ansprüche, wobei der Gleichspannungsschalter (16) eine Spannungsfestigkeit aufweist, die kleiner als 20 kV ist.

10. Verfahren zum Kurzschlussschutz einer Umrichteranordnung (1, 101) nach einem der Ansprüche 1 bis 9, bei dem bei einem gleichspannungsseitigen Kurzschluss alle Submodule (14) stromrichtungsunabhängig überbrückt werden, worauf der Gleichspannungsschalter (16) abgeschaltet wird, so dass ein gleichspannungsseitiger Kurzschlussstrom auf den Freilaufpfad (22) kommutiert wird,
wobei ein im Freilaufpfad (22) angeordneter Absorberschalter (103) abgeschaltet wird, so dass ein Strom im Freilaufpfad (22) auf ein parallel zum Absorberschalter (103) angeordnetes Energieabsorberelement (24) kommutiert wird.

## Claims

1. Converter arrangement (1, 101) having
- a first phase module extending between a first and a second DC voltage pole (51, 61) and having a first AC voltage connection (2), said first phase module comprising a first phase module branch (8) extending between the first AC voltage connection (2) and the first DC voltage pole (51) and a second phase module branch (9) extending between the first AC voltage connection (2) and the second DC voltage pole (61),
- a second phase module extending between the first and the second DC voltage pole (51, 61) and having a second AC voltage connection (3), said second phase module comprising a third phase module branch (10) extending between the second AC voltage connection (3) and the first DC voltage pole (51) and a fourth phase module branch (11) extending between the second AC voltage connection (3) and the second DC voltage pole (61), wherein
each of the phase module branches (8, 9, 10, 11) comprises a series circuit containing two-pole submodules (14), wherein each submodule comprises at least two series-connected power semiconductor switches (28, 29) and an energy store (31) and can be bypassed in a manner independent of current direction by means of a bypass unit (33) arranged in parallel with the connection terminals of said submodule,
- a DC voltage switch (16) in one of the two DC voltage poles (51, 61),
**characterized by**
- a freewheeling path (22), which extends between a first DC voltage link (71) that can be connected to the first DC voltage pole (51) and a second DC voltage link (72) that can be connected to the second DC voltage pole (61) and comprises a semiconductor element (23) having a reverse direction and a forward direction, wherein
the freewheeling path (22) comprises a parallel circuit (102), which is arranged in series with the semiconductor element (23) and has an energy absorber element (24) and an absorber switch (103) arranged in parallel therewith.

2. Converter arrangement (101) according to Claim 1, wherein the absorber switch (103) comprises a series circuit containing absorber switching units, which each comprise a power semiconductor switch (104) and a freewheeling diode (105) arranged in antiparallel therewith.

3. Converter arrangement (1, 101) according to either of the preceding claims, wherein the bypass unit (33) comprises antiparallel-connected thyristors (34, 35).

4. Converter arrangement (1, 101) according to one of the preceding claims, wherein the semiconductor element (23) in the freewheeling path comprises at least one diode and/or a thyristor.

5. Converter arrangement (1, 101) according to one of the preceding claims, wherein the submodules (14) are embodied as half-bridge circuits.

6. Converter arrangement (1, 101) according to one of the preceding claims, wherein the DC voltage switch (16) comprises at least one power semiconductor switching module (17) having a power semiconductor switch (18).

7. Converter arrangement (1, 101) according to Claim 6, wherein the DC voltage switch (16) has a series circuit composed of the at least one power semiconductor switching module (17) and at least one isolating switch (21).

8. Converter arrangement (1, 101) according to Claim 6 or 7, wherein the DC voltage switch (16) comprises a surge arrester (20), which is arranged in parallel with the at least one power semiconductor switching module (17).

9. Converter arrangement (1, 101) according to one of the preceding claims, wherein the DC voltage switch (16) has a dielectric strength that is lower than 20 kV.

10. Method for the short-circuit protection of a converter arrangement (1, 101) according to one of Claims 1 to 9, in which, in the event of a DC-voltage-side short circuit, all submodules (14) are bypassed in a manner independent of current direction, whereupon the DC voltage switch (16) is turned off, with the result that a DC-voltage-side short-circuit current is commutated onto the freewheeling path (22), wherein an absorber switch (103) arranged in the freewheeling path (22) is turned off, with the result that a current in the freewheeling path (22) is commutated onto an energy absorber element (24) arranged in parallel with the absorber switch (103) .

## Revendications

1. Montage (1, 101) d'onduleur, comprenant
- un premier module de phase, qui s'étend entre un premier et un deuxième pôle (51, 61) de tension continue, qui a une première borne (2) de tension alternative et qui comprend une première branche (8) de module de phase, s'étendant entre la première borne (2) de tension alternative et le premier pôle (51) de tension continue, et une deuxième branche (9) de module de phase, s'étendant entre la première borne (2) de tension alternative et le deuxième pôle (61) de tension continue,
- un deuxième module de phase, qui s'étend entre le premier et le deuxième pôle (51, 61) de tension continue, qui a une deuxième borne (3) de tension alternative et qui comprend une troisième branche (10) de module de phase, s'étendant entre la deuxième borne (3) de tension alternative et le premier pôle (51) de tension continue, et une quatrième branche (11) de module de phase, s'étendant entre la deuxième borne (3) de tension alternative et le deuxième pôle (61) de tension continue, dans lequel
chacune des branches (8, 9, 10, 11) de module de phase comprend un circuit série de sous-modules (14) bipolaires, chaque sous-module comprenant au moins deux interrupteurs (28, 29) à semi-conducteur de puissance montés en série et un accumulateur (31) d'énergie et pouvant être shunté, indépendamment du sens du courant, au moyen d'une unité (33) de shuntage montée en parallèle à ses bornes de connexion,
- un interrupteur (16) de tension continue dans l'un des deux pôles (51, 61) de tension continue,
**caractérisé par**
- un trajet (22) de roue libre, qui s'étend entre une première liaison (71) de tension continue pouvant être reliée au premier pôle (51) de tension continue et une deuxième liaison (72) de tension continue pouvant être reliée au deuxième pôle (61) de tension continue et comprend un élément (23) à semi-conducteur ayant un sens bloquant et un sens passant, dans lequel
le trajet (22) de roue libre comprend un circuit (102) parallèle, qui est monté en série avec l'élément (23) à semi-conducteur et qui a un élément (24) absorbant de l'énergie et un interrupteur (103) d'absorbeur, qui y est monté en parallèle.

2. Montage (101) d'onduleur suivant la revendication 1, dans lequel l'interrupteur (103) d'absorbeur comprend un circuit série d'unités d'interruption d'absorbeur, qui comprennent chacune un interrupteur (104) à semi-conducteur de puissance et une diode (105) de roue libre, qui y est montée tête-bêche.

3. Montage (1, 101) d'onduleur suivant l'une des revendications précédentes, dans lequel l'unité (33) de shuntage comprend des thyristors (34, 35) montés tête-bêche.

4. Montage (1, 101) d'onduleur suivant l'une des revendications précédentes, dans lequel l'élément (23) à semi-conducteur, dans le trajet de roue libre, comprend au moins une diode et/ou un thyristor.

5. Montage (1, 101) d'onduleur suivant l'une des revendications précédentes, dans lequel les sous-modules (14) sont réalisés sous la forme de circuits à demi-pont.

6. Montage (1, 101) d'onduleur suivant l'une des revendications précédentes, dans lequel l'interrupteur (16) de tension continue comprend au moins un module (17) d'interruption à semi-conducteur de puissance ayant un interrupteur (18) à semi-conducteur de puissance.

7. Montage (1, 101) d'onduleur suivant la revendication 6, dans lequel l'interrupteur (16) de tension continue a un circuit série composé d'au moins un module (17) d'interruption à semi-conducteur de puissance et d'au moins un interrupteur (21) de sectionnement.

8. Montage (1, 101) d'onduleur suivant la revendication 6 ou 7, dans lequel l'interrupteur (16) de tension continue comprend un parafoudre (20), qui est monté en parallèle au au moins le module (17) d'interruption à semi-conducteur de puissance.

9. Montage (1, 101) d'onduleur suivant l'une des revendications précédentes, dans lequel l'interrupteur (16) de tension continue a une rigidité diélectrique, qui est plus petite que 20 kV.

10. Procédé de protection vis-à-vis d'un court circuit d'un montage (1, 101) d'onduleur suivant l'une des revendications 1 à 9, dans lequel, s'il se produit un court circuit du côté de la tension continue, on shunte tous les sous-modules (14), indépendamment du sens du courant, puis on ouvre l'interrupteur (16) de tension continue, de manière à commuter un courant de court circuit du côté de la tension continue au trajet (22) de roue libre, dans lequel on ouvre un interrupteur (103) d'absorbeur monté dans le trajet (22) de roue libre, de manière à commuter un courant dans le trajet (22) de roue libre sur un élément (24) d'absorption d'énergie, monté en parallèle à l'interrupteur (103) d'absorbeur.
